(19) **Europäisches Patentamt / European Patent Office / Office européen des brevets**

(11) **EP 1 340 891 B1**

(12) **FASCICULE DE BREVET EUROPEEN**

(45) Date de publication et mention
de la délivrance du brevet:
**20.02.2008 Bulletin 2008/08**

(51) Int Cl.:
*F02B 23/06* $^{(2006.01)}$   *F02B 1/12* $^{(2006.01)}$
*F02B 31/00* $^{(2006.01)}$   *F02M 61/18* $^{(2006.01)}$

(21) Numéro de dépôt: **03290351.0**

(22) Date de dépôt: **13.02.2003**

(54) **Procédé et moteur pour assurer le mélange d'au moins un fluide gazeux, tel que de l'air, et d'un carburant dans la chambre de combustion d'un moteur à combustion interne à injection directe**

Verfahren und Verbrennungsmotor zur gesicherten Mischung von zumindest einem gasförmigen Fluid, wie Luft, und einem Brennstoff in einer Brennkammer einer direkteinspritzenden Brennkraftmaschine

Method and engine ensuring the mixture of at least one gaseous fluid, like air, and a fuel in a combustion chamber of a direct injection internal combustion engine

(84) Etats contractants désignés:
**DE ES GB IT**

(30) Priorité: **01.03.2002 FR 0202597**

(43) Date de publication de la demande:
**03.09.2003 Bulletin 2003/36**

(73) Titulaire: **Institut Français du Pétrole
92852 Rueil Malmaison Cédex (FR)**

(72) Inventeurs:
• **Gatellier, Bertrand
78380 Bougival (FR)**
• **Walter, Bruno
92250 La Garenne Colombes (FR)**

(56) Documents cités:
DE-B- 1 055 873        US-A- 4 446 830
US-A- 4 473 046        US-A- 4 858 578
US-A- 5 373 820        US-A- 5 875 743
US-A- 5 906 183

• STOMMEL P; DÜRNHOLZ M: "GRUNDLAGENUNTERSUCHUNGEN ZUR GEMISCHBILDUNG IM HOCHAUFGELADENEN, DIREKTEINSPRITZENDEN DIESELMOTOR; BERICHT AUS DER TÄTIGKEIT DER FORSCHUNGSVEREINIGUNG VERBRENNUNGSKRAFTMASCHINEN E. V. (FVV)" MTZ MOTORTECHNISCHE ZEITSCHRIFT, FRANCKH'SCHE VERLAGSHANDLUNG, ABTEILUNG TECHNIK. STUTTGART, DE, vol. 55, no. 11, 1 novembre 1994 (1994-11-01), pages 644-648, XP000476365 ISSN: 0024-8525
• PATENT ABSTRACTS OF JAPAN vol. 015, no. 374 (M-1160), 20 septembre 1991 (1991-09-20) -& JP 03 149315 A (YANMAR DIESEL ENGINE CO LTD), 25 juin 1991 (1991-06-25)

**EP 1 340 891 B1**

**Description**

La présente invention se rapporte à un procédé destiné à assurer le mélange d'au moins un fluide gazeux, tel que de l'air, et d'un carburant dans la chambre de combustion d'un moteur à combustion interne à injection directe, notamment de type Diesel.

L'invention concerne également un moteur à combustion interne utilisant un tel procédé.

Il est déjà connu dans les moteurs Diesel à combustion traditionnelle d'utiliser une admission particulière du fluide gazeux, tel que de l'air ou un mélange d'air et de gaz d'échappement recirculés, pour favoriser le mélange entre ce fluide et le carburant injecté.

Certaines des réalisations connues pour favoriser ce mélange consistent comme mieux décrit dans US 5,906,183, à donner un mouvement tourbillonnaire, c'est-à-dire un mouvement de rotation du fluide gazeux autour d'un axe sensiblement parallèle ou confondu à celui de la chambre de combustion, soit après son admission dans la chambre de combustion, soit dès son entrée dans cette chambre pour que le fluide gazeux se mélange "par brassage" avec le carburant injecté sous forme de fines gouttelettes.

Ce mouvement tourbillonnaire du fluide gazeux peut être créé par au moins une tubulure d'admission disposée tangentiellement et de manière radiale à la chambre de combustion, dite tubulure tangentielle. Ainsi, le fluide gazeux est admis le long de la paroi du cylindre et génère un mouvement tourbillonnaire autour de l'axe principal de la chambre de combustion. Il peut être aussi créé par au moins une tubulure de forme hélicoïde, dite tubulure hélicoïdale, qui est conformée de telle sorte que le fluide gazeux ait déjà un mouvement tourbillonnaire dés son entrée dans cette chambre de combustion. Il peut être également envisagé d'associer au moins une tubulure tangentielle avec au moins une tubulure hélicoïdale pour générer ce mouvement tourbillonnaire.

Ce mouvement tourbillonnaire du fluide gazeux est connu par l'homme du métier sous le terme de "swirl" et se caractérise par un taux qui est égal à $N_D/N$ où $N_D$ est évalué par intégration sur le trajet du piston, pendant la course d'admission, de la rotation de la charge élémentaire introduite en tenant compte de la levée de soupape et de la vitesse du piston, suivie d'une division par la quantité totale d'air introduite (ou de fluide gazeux) alors que N est la vitesse de rotation du moteur.

Le swirl a pour avantage d'améliorer le mélange du fluide gazeux avec le carburant tout en diminuant les émissions de polluants, telles que les fumées. Il trouve plus particulièrement son intérêt dans le fonctionnement à faible régime et à faible charge du moteur lorsque l'aérodynamique interne de la chambre de combustion est insuffisante pour assurer le mélange du fluide gazeux avec le carburant.

Cependant, lorsque l'on utilise un taux de swirl trop élevé,, ceci a pour inconvénient non négligeable de dévier circonférentiellement les jets de carburant en phase vapeur issus de l'injecteur et on arrive à une configuration selon laquelle les jets de carburants viennent à se superposer les uns sur les autres, ce qui est néfaste pour les émissions de fumées.

Ainsi, dans les moteurs diesels à combustion traditionnelle, il existe un compromis, pour chaque point de fonctionnement, entre le taux de swirl maximal permettant de limiter les émissions polluantes à charge partielle et un taux de swirl compatible avec les caractéristiques d'injection, telles que l'angle de nappe des jets de carburant, le diamètre des trous de l'injecteur de carburant, le nombre de trous de cet injecteur, la pression d'injection du carburant, de façon à éviter le recouvrement des jets à forte charge. De manière générale, on choisit toujours un swirl assez élevé, qui est supérieur à 3.

Dans le cas de moteurs Diesel fonctionnant en combustion homogène, c'est un mélange plus ou moins homogène entre le fluide gazeux et le carburant qui s'auto-inflamme et il est donc important de favoriser le mélange du fluide gazeux et du carburant.

Pour favoriser l'obtention de ce mélange homogène, le carburant et le fluide gazeux sont mis en présence précocement dans le cycle. Un taux de swirl élevé serait théoriquement bénéfique à cause du brassage entre le fluide gazeux et le carburant qu'il provoque, mais les gouttelettes de carburant peuvent être projetées vers la paroi du cylindre et se diluer ainsi dans l'huile.

Cette projection de carburant entraîne, non seulement une dégradation de la tenue du lubrifiant présent sur cette paroi ainsi que la création de suies avec un risque de grippage du piston dans le cylindre, mais aussi une augmentation des émissions de polluants et une réduction des performances du moteur.

La présente invention se propose de remédier aux inconvénients mentionnés ci-dessus grâce à un procédé et à un moteur qui permettent d'obtenir un meilleur mélange du fluide gazeux avec le carburant injecté dans la chambre de combustion tout en autorisant la combustion homogène à faible charge et la combustion traditionnelle à forte charge.

A cet effet, l'invention concerne un procédé pour assurer le mélange d'au moins un fluide gazeux dans la chambre de combustion d'un moteur à combustion interne à injection directe comprenant au moins un cylindre, une culasse, un piston coulissant dans ce cylindre, un injecteur de carburant, une chambre de combustion délimitée sur un côté par la face supérieure du piston comprenant un téton pointant vers la culasse et disposé dans un bol concave, et des moyens d'admission d'au moins un fluide gazeux, lesdits moyens d'admission étant conformés pour admettre le fluide gazeux dans la chambre de combustion dans un mouvement tourbillonnaire ou swirl, caractérisé en ce que l'on injecte le carburant avec l'injecteur ayant uri angle de nappé inférieur ou égal à $2 Arctg \dfrac{CD}{2F}$ où CD est le diamètre du cylindre et F la distance entre le point d'origine des jets de carburant issus de l'injecteur et la position du piston correspondant à un angle de vilebrequin de 50° par rapport au point mort haut (PMH) et en ce que l'on admet le fluide gazeux avec un taux de swirl inférieur ou égal à 1,7.

On peut admettre le fluide gazeux dans un mouvement tourbillonnaire ou swirl coaxial à celui du bol.

On peut injecter le carburant avec un angle de nappe inférieur ou égal à 120°.

On peut injecter le carburant avec un angle de nappe compris entre 40° et 100°.

On peut utiliser un piston avec un téton tel que l'angle au sommet dudit téton soit sensiblement en accord avec l'angle de nappe de l'injecteur et un bol dont la paroi est conformée pour que le carburant injecté soit guidé vers l'extérieur de celle-ci et vaporisé sans atteindre les parois dudit cylindre, pour toute position du piston jusqu'à ± 30° par rapport au point mort haut (PMH).

L'invention concerne également un moteur à combustion interne comprenant au moins un cylindre, une culasse, un piston coulissant dans ce cylindre, un injecteur de carburant, une chambre de combustion délimitée sur un côté par la face supérieure du piston comprenant un téton pointant vers la culasse et disposé dans un bol concave, des moyens d'admission d'au moins un fluide gazeux, lesdits moyens d'admission étant conformés pour admettre le fluide gazeux dans la chambre de combustion dans un mouvement tourbillonnaire ou swirl, caractérisé en ce que ce moteur comporte au moins l'injecteur pour injecter du carburant avec un angle de nappe inférieur ou égal à $2\,Arctg\,\dfrac{CD}{2F}$ où CD est le diamètre du cylindre et F la distance entre le point d'origine des jets de carburant issus de l'injecteur et la position du piston correspondant à un angle de vilebrequin de 50° par rapport au point mort haut (PMH) et en ce que les moyens d'admission sont prévus pour admettre le fluide gazeux dans la chambre de combustion avec un taux de swirl inférieur ou égal 1,7.

Les moyens d'admission peuvent comporter au moins une tubulure d'admission conformée pour admettre le fluide gazeux avec un taux de swirl inférieur ou égal à 1,7.

Les moyens d'admission peuvent comporter un moyen de vannage et le moteur peut comprendre au moins un moyen de commande pour actionner le moyen de vannage de manière à obtenir un taux de swirl inférieur ou égal à 1,7.

L'angle de nappe de l'injecteur peut être choisi entre 0° et 120°.

L'angle de nappe de l'injecteur peut être choisi entre 40° et 100°.

L'angle au sommet du téton est choisi supérieur à l'angle de nappe d'une valeur comprise entre 0° et 30°.

Le bol peut comprendre une paroi latérale inclinée et l'angle d'inclinaison de la paroi est inférieur à 45°.

Les autres caractéristiques et avantages de l'invention vont ressortir à la lecture de la description qui va suivre, donnée uniquement à titre d'exemple non limitatif, et à laquelle sont annexées :

- la figure 1 qui montre schématiquement un moteur à combustion interne utilisant le procédé selon l'invention ;
- la figure 2 qui est un graphique montrant l'évolution de la fraction brûlée dans la chambre de combustion pour différents taux de swirl à forte charge ;
- la figure 3 qui est un graphique représentant l'évolution de la performance et de la consommation du moteur en fonction de la variation du taux de swirl sur un point de charge partielle en combustion homogène ;
- la figure 4 qui est un autre graphique montrant le gain en puissance et en consommation du moteur pour différents taux de swirl sur un point de forte charge et
- la figure 5 qui est un graphique montrant la température des gaz d'échappement et la quantité de fumées pour différents taux de swirl sur un point de forte charge.

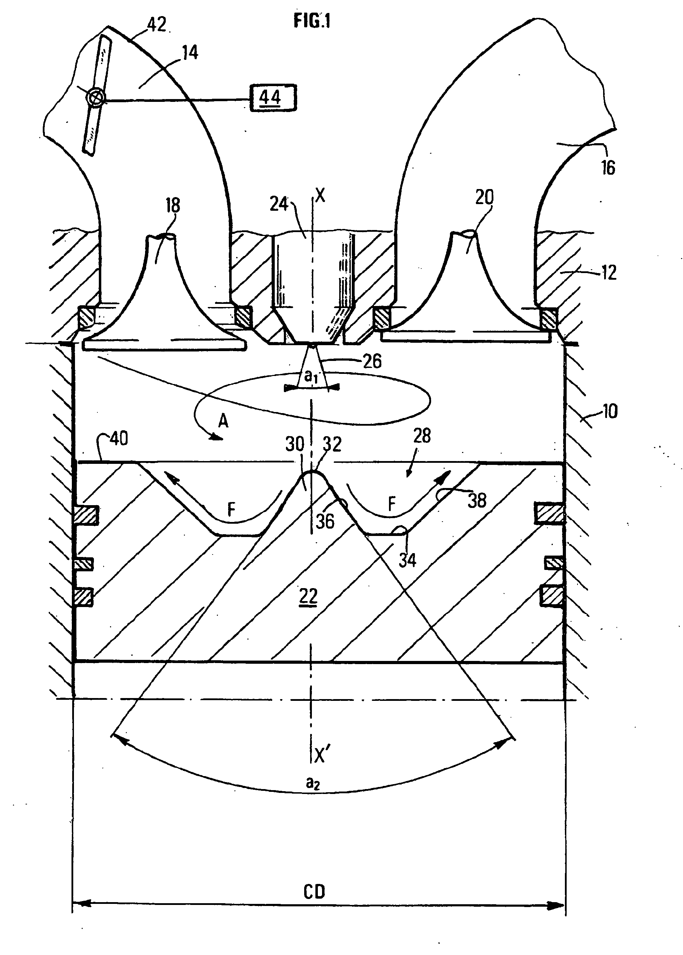

En se reportant à la figure 1, un moteur à combustion interne, de type Diesel, comprend au moins un cylindre 10 d'axe XX', une culasse 12, au moins une tubulure d'admission 14 de fluide gazeux, tel que de l'air ou un mélange d'air et de gaz recirculés (EGR), au moins une tubulure d'échappement 16, les tubulures étant commandées en ouverture, ou en fermeture, par un moyen d'obturation tel que, respectivement, une soupape d'admission 18 et une soupape d'échappement 20, un piston 22 coulissant dans le cylindre 10 et un injecteur de carburant 24 multi-jets, de préférence disposé dans l'axe XX' du cylindre et à partir duquel sont issus des jets 26 de carburant.

L'injecteur de carburant est de type à faible angle de nappe $a_1$ et est choisi pour que les parois du cylindre ne soient jamais mouillées par le carburant pour toute position du piston comprise entre +50° et +α ou entre -50° et -α, où α représente l'angle du vilebrequin pour la phase d'injection choisie par rapport au point mort haut (PMH), cet angle α étant supérieur à 50° et inférieur ou égal à 180° pour obtenir une combustion de type homogène.

Si CD désigne le diamètre du cylindre 10 (en mm) et F la distance (en mm) entre le point d'origine des jets de l'injecteur 24 et la position du piston correspondante à un angle de vilebrequin de 50°, alors l'angle de nappe $a_1$ (en degré) sera inférieur ou égal à

$$2\,Arctg\,\frac{CD}{2F}.$$

Une fourchette angulaire typique pour l'angle

de nappe $a_1$ est au plus de 120° et préférentiellement entre 40° et 100°.

La chambre de combustion est délimitée par la face interne de la culasse 12, la paroi circulaire du cylindre 10 et la face supérieure du piston 22.

Cette face supérieure du piston comporte un bol concave 28 à l'intérieur duquel est disposé un téton 30 qui s'élève vers la culasse 12 en se situant au centre de ce bol.

Dans l'exemple représenté, l'axe général du bol 28, l'axe de l'injecteur 24 et l'axe du téton 30 sont confondus avec l'axe XX' du cylindre mais, bien entendu, il peut être prévu que les axes du bol, de l'injecteur et du téton ne soient pas coaxiaux avec celui du cylindre. Mais il est important que la disposition soit telle que l'axe de la nappe de jets de carburant 26 issus de l'injecteur 24, l'axe du téton 30 et l'axe du bol 28 soient sensiblement coaxiaux.

Le téton 30, de forme générale tronconique, comporte un sommet 32, de préférence arrondi, se poursuivant, en direction du fond 34 du bol, par un flanc incliné 36 sensiblement rectiligne puis, à partir du fond du bol 34, par une paroi latérale inclinée 38 sensiblement rectiligne rejoignant une surface sensiblement horizontale 40 de la face supérieure du piston 22.

L'angle au sommet $a_2$ du téton 30 et l'angle d'inclinaison de la paroi latérale 38 du bol 28 sont adaptés sensiblement à l'angle de nappe de l'injecteur 24, de façon que, en combustion traditionnelle avec une injection de carburant proche du point mort haut combustion (PMHc), le carburant soit injecté sensiblement le long du flanc 36 du téton, puis remonte le long de la paroi latérale 38 du bol comme représenté par les flèches F sur la figure 1.

Avantageusement, l'angle au sommet $a_2$ du téton est choisi d'une façon telle qu'il soit supérieur à l'angle de nappe $a_1$ des jets de carburant d'une valeur comprise entre 0° et 30° et l'angle d'inclinaison de la paroi latérale 38 du bol 28 est inférieur à 45°.

La chambre de combustion est adaptée à recevoir par la tubulure d'admission 14 au moins un fluide gazeux, tel que de l'air extérieur ou un mélange d'air et de gaz d'échappement recirculés (EGR), de telle manière que ce fluide soit introduit dans cette chambre en créant un mouvement tourbillonnaire ou swirl à l'intérieur de cette chambre, comme symbolisé par la flèche A sur la figure 1.

Dans l'exemple de la figure 1, le mouvement tourbillonnaire du fluide gazeux est d'axe sensiblement coaxial avec l'axe XX' du cylindre et se produit grâce à la disposition tangentielle de la tubulure 14, c'est-à-dire que la direction générale de cette tubulure, projetée sur un plan sensiblement perpendiculaire à l'axe XX', est sensiblement tangentielle à la paroi du cylindre 10.

Bien entendu, une disposition dite hélicoïdale de la tubulure 14 est également envisageable pour réaliser ce swirl, cette disposition consistant à réaliser la tubulure de manière à ce qu'elle s'étende en spirale autour de son axe général qui est principalement vertical. Plusieurs tubulures sont également possibles, ainsi que des associations d'au moins une tubulure hélicoïdale avec au moins une tubulure tangentielle.

Ainsi, pour réaliser le mélange du fluide gazeux et du carburant, la tubulure est conformée pour injecter le fluide gazeux dans la chambre de combustion avec un taux de swirl inférieur ou égal à 1,7 lorsque la soupape d'admission 18 est ouverte.

Dans une autre configuration, il est prévu d'équiper cette tubulure d'admission d'un moyen de vannage, telle qu'une vanne de type papillon 42, dont la rotation est commandée par un moyen de commande 44 qui permet d'obtenir un taux de swirl inférieur ou égal à 1,7.

Ainsi, pour réaliser le mélange du fluide gazeux et du carburant, la soupape d'admission 16 est ouverte et la vanne 42 est commandée en ouverture par le moyen de commande 44, tel qu'un micromoteur électrique, de manière à admettre dans la chambre de combustion un fluide gazeux dont le taux de swirl est inférieur ou égal à 1, 7.

En mode de combustion traditionnelle, pendant l'admission du fluide gazeux, le carburant, sous forme de nappe de jets 26 à faible angle de nappe tel que décrit précédemment, est projeté sur le téton 32 et plus particulièrement le long de son flanc 36. Ce carburant se vaporise dans le bol 28 et se mélange avec le fluide gazeux en remontant le long de la paroi 38 vers la sortie de bol.

Si on utilise un fort taux de swirl du fluide gazeux, il se crée une sorte de bouchon en sortie du bol qui crée un obstacle et gêne, voire empêche, la sortie du carburant vaporisé hors de ce bol.

En effet, les vitesses tangentielles du fluide gazeux dépassent les vitesses sensiblement axiales du carburant vaporisé et, par conséquent, la remontée du carburant le long de la paroi du bol est bloquée par le fluide gazeux tourbillonnaire, ceci est d'autant plus vrai que la vitesse des jets est faible.

Il est important que le carburant puisse ressortir du bol car, s'il reste prisonnier à l'intérieur de celui-ci, toute une partie de l'air (ou du fluide gazeux) de la chasse, qui est situé au voisinage de la surface 40 du piston 22, n'est pas utilisée.

De ce fait, une partie du carburant n'est pas mélangé avec le fluide gazeux ce qui, d'une part, réduit les possibilités de richesse maximale et, d'autre part, rend imparfaite la combustion qui en résulte, ce qui a pour inconvénient de produire des hydrocarbures imbrûlés et des fumées ainsi qu'une diminution de la performance du moteur.

En utilisant un faible taux de swirl, comme précédemment mentionné, le carburant vaporisé peut sortir du bol grâce au fait que la vitesse axiale du fluide gazeux est inférieure à celle du carburant vaporisé. En outre, ce carburant peut se mélanger aisément avec le fluide gazeux par le fait que la vitesse circonférentielle de ce fluide est telle qu'elle permette un brassage entre le carburant et fluide gazeux. Ainsi, les performances, en pleine charge en combustion traditionnelle du moteur, ne sont pas altérées par ce taux de swirl.

L'utilisation conjointe de l'injecteur à angle de nappe relativement faible et d'un taux de swirl faible autorise un mode de fonctionnement traditionnel pour une injection de carburant près du point mort haut mais dans une fourchette angulaire plus grande que celle permise habituellement tout en ne pénalisant pas le mélange du carburant avec le fluide gazeux.

De plus, il est permis d'éviter la présence de carburant liquide sur les parois du cylindre tout en offrant de larges possibilités de contrôle de la pollution et des performances des moteurs.

A pleine charge et aux charges élevées, le moteur permet un bon entraînement du carburant vaporisé en favorisant ainsi son mélange avec le fluide gazeux afin d'obtenir une bonne vitesse de combustion et des richesses de fonctionnement élevées, traduisant une bonne utilisation du fluide gazeux admis et du carburant injecté.

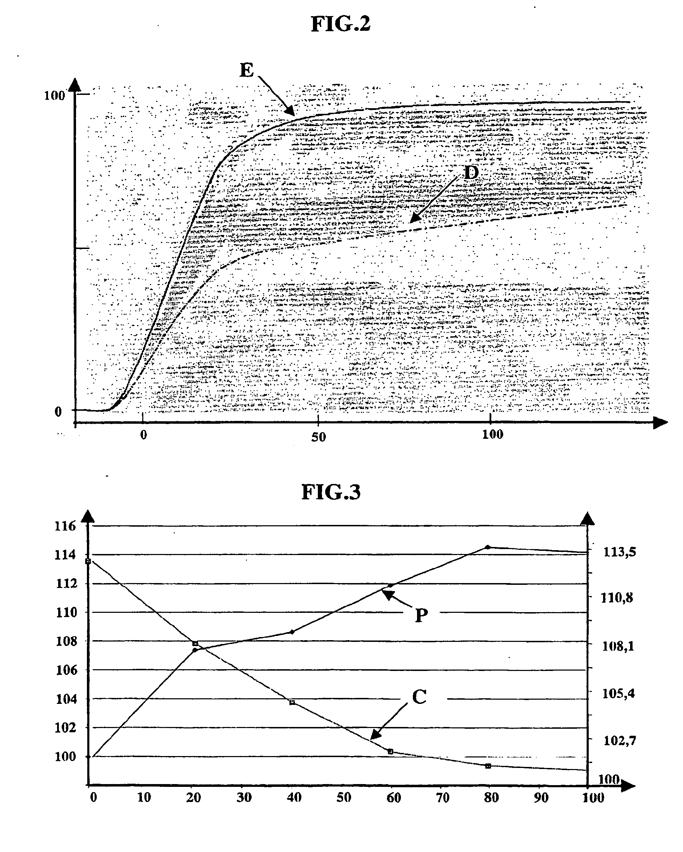

A titre de comparatif, le demandeur à réaliser des tests dont les résultats apparaissent sur la figure 2. Sur cette figure, l'ordonné indique la quantité de fraction brûlée du carburant (en %) et, en abscisse, le déplacement angulaire du vilebrequin (en degré) correspondant à la phase de combustion du mélange carburé dans la chambre de combustion du moteur à forte charge, ce déplacement concordant avec le déplacement linéaire du piston 22.

Les courbes D et E sont représentatives de la fraction brûlée du mélange carburé respectivement pour un taux de swirl de 5 et pour un taux de 1,5 du fluide gazeux, ici de l'air extérieur, admis dans cette chambre de combustion.

Comme il peut être constaté à la lecture de ce graphique, la fraction brûlée du carburant est plus élevée pour un mélange carburé résultant d'un taux de swirl de 1, 5 (courbe E).

Ceci se concrétise par une augmentation de la performance du moteur de l'ordre de 10%.

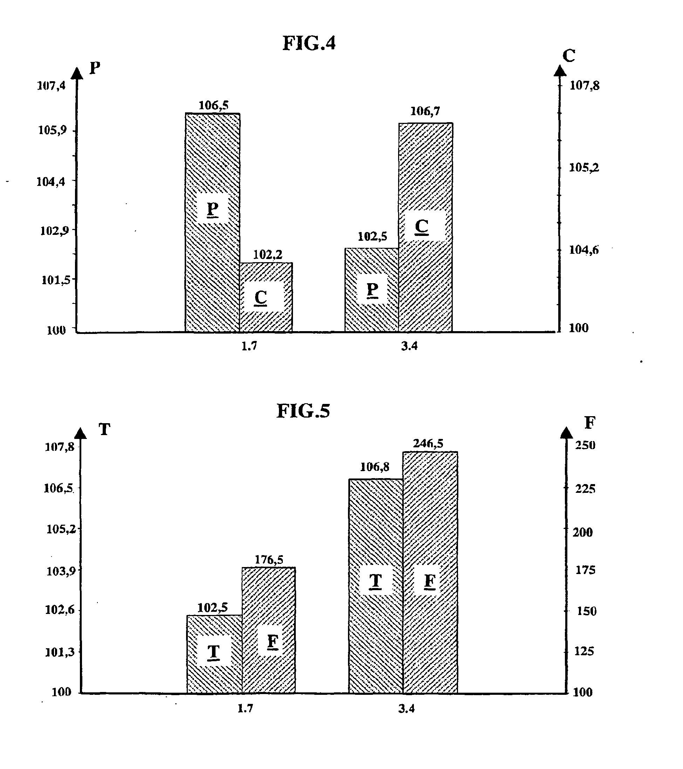

A titre d'exemple, le demandeur a effectué une série de tests dont les résultats sont représentés sur les figures 4 et 5.

Pour ces tests, le demandeur a utilisé un moteur à injection directe de type Diesel avec un taux de swirl de 1,7 et de 3,4.

Selon les résultats de la figure 4 qui montre un graphique portant, en ordonnés, la puissance du moteur P (en base 100) et sa consommation C (en base 100) et, en abscisse, les taux de swirl, la consommation a diminué de l'ordre de 5% et la puissance a augmenté d'environ 4% avec un moteur fonctionnant avec un taux de swirl de 1,7 par rapport à ce même moteur fonctionnant avec un taux de swirl de 3,4.

Selon la figure 5 qui montre un graphique portant, en ordonnés, la température des gaz d'échappement T (en base 100) et la teneur en fumées F (en base 100) et, en abscisse, les taux de swirl, les résultats des tests font apparaître que la température des gaz d'échappement a diminué de l'ordre 4% et l'émission de fumées a diminué d'environ 30% pour un moteur fonctionnant avec un taux de taux de swirl de 1,7 par rapport à un moteur avec un taux de swirl de 3,4.

Dans le cas de ce moteur Diesel fonctionnant en combustion homogène, c'est un mélange plus ou moins homogène entre le fluide gazeux et le carburant qui s'auto-inflamme et il est donc important de favoriser le mélange du fluide gazeux et du carburant.

Pour favoriser l'obtention de ce mélange homogène, le carburant et le fluide gazeux sont mis en présence par injections précoces dans le cycle. Un taux de swirl élevé serait théoriquement bénéfique à cause du brassage entre le fluide gazeux et le carburant qu'il provoque, mais les gouttelettes de carburant peuvent être projetées vers la paroi du cylindre et se diluer ainsi dans l'huile, ce qui entraîne les inconvénients cités précédemment.

Aux charges partielles, un angle de nappe réduit associé à un faible taux de swirl permet une grande latitude dans les réglages du système d'injection en s'affranchissant du mouillage des parois du cylindre et en assurant le mélange du carburant avec le fluide gazeux. De manière générale, le faible angle de nappe des jets de carburant autorise une grande latitude de réglage alors qu'un faible taux de swirl génère peu de centrifugation des gouttelettes de carburant.

On se réfère maintenant à la figure 3 qui est un graphe portant, en ordonnés, la puissance du moteur P (en base 100) et sa consommation C (en base 100) et, en abscisse, les taux de swirl, pour un moteur fonctionnant sur un point de charge partielle en combustion homogène. Ces taux de swirl ont été obtenus en utilisant un moteur comportant une tubulure hélicoïdale d'admission et une tubulure d'admission tangentielle et dont l'une des deux tubulures est équipée d'un moyen de vannage, ici une vanne de type papillon 42, comme précédemment décrit. Pour une ouverture de 100 % de cette vanne (position pleine ouverture), il est obtenu un taux de swirl de l'ordre de 1 et pour une ouverture de 0 % de cette même vanne (position pleine fermeture), le taux de swirl est de l'ordre de 3.

A la lecture de ce graphique, il peut être constaté que la consommation reste sensiblement constante pour un déplacement de la vanne papillon de 100 % à 65 %, ce qui correspond à un taux de swirl d'environ 1 jusqu'à 1,7, puis augmente de façon non négligeable à partir de cette valeur. La puissance du moteur quant à elle reste sensiblement à son maximum pour un taux de swirl de 1 à environ 1,7 puis chute brutalement au-delà de cette valeur.

Ainsi, il peut être constaté qu'un taux de swirl inférieur ou égal à 1, 7 permet d'obtenir une combustion procurant un maximum de puissance au moteur tout en limitant la consommation de carburant et en particulier sa dilution.

Il peut être remarqué que l'utilisation d'un faible taux de swirl permet l'utilisation de culasse à forte perméabilité.

La présente invention n'est pas limitée à l'exemple décrit mais englobe toutes variantes sans sortir du cadre de l'invention tel que défini par les revendications annexées.

## Revendications

1. Procédé pour assurer le mélange d'au moins un fluide gazeux dans la chambre de combustion d'un moteur à combustion interne à injection directe comprenant au moins un cylindre (10), une culasse (12), un piston (22) coulissant dans ce cylindre, un injecteur (24) de carburant, une chambre de combustion délimitée sur un côté par la face supérieure du piston (22) comprenant un téton (30) pointant vers la culasse (12) et disposé dans un bol concave (28), et des moyens d'admission (14, 18) d'au moins un fluide gazeux, lesdits moyens d'admission étant conformés pour admettre le fluide gazeux dans la chambre de combustion dans un mouvement tourbillonnaire ou swirl, **caractérisé en ce que** l'on injecte le carburant avec l'injecteur (24) ayant un angle de nappe $(a_1)$ inférieur ou égal à $2Arctg\dfrac{CD}{2F}$ où CD est le diamètre du cylindre (10) et F la distance entre le point d'origine des jets de carburant issus de l'injecteur (24) et la position du piston correspondant à un angle de vilebrequin de 50° par rapport au point mort haut (PMH) et **en ce que** l'on admet le fluide gazeux avec un taux de swirl inférieur ou égal à 1,7.

2. Procédé selon la revendication 1, **caractérisé en ce que** l'on admet le fluide gazeux dans un mouvement tourbillonnaire ou swirl coaxial à celui du bol (28).

3. Procédé selon la revendication 1, **caractérisé en ce que** l'on injecte le carburant avec un angle de nappe $(a_1)$ inférieur ou égal à 120°.

4. Procédé selon la revendication 3, **caractérisé en ce que** l'on injecte le carburant avec un angle de nappe $(a_1)$ compris entre 40° et 100°.

5. Procédé selon l'une des revendications précédentes, **caractérisé en ce que** l'on utilise un piston (22) avec un téton (30) tel que l'angle au sommet $(a_2)$ dudit téton soit sensiblement en accord avec l'angle de nappe $(a_1)$ de l'injecteur (24) et un bol (28) dont la paroi (38) est conformée pour que le carburant injecté soit guidé vers l'extérieur de celle-ci et vaporisé sans atteindre les parois dudit cylindre, pour toute position du piston jusqu'à ± 30° par rapport au point mort haut (PMH).

6. Moteur à combustion interne comprenant au moins un cylindre (10), une culasse (12), un piston (22) coulissant dans ce cylindre, un injecteur (24) de carburant, une chambre de combustion délimitée sur un côté par la face supérieure du piston (22) comprenant un téton (30) pointant vers la culasse (12) et disposé dans un bol concave (28), des moyens d'admission (14, 16) d'au moins un fluide gazeux, lesdits moyens d'admission (14, 18) étant conformés pour admettre le fluide gazeux dans la chambre de combustion dans un mouvement tourbillonnaire ou swirl, **caractérisé en ce que** ce moteur comporte au moins l'injecteur (24) pour injecter du carburant avec un angle de nappe $(a_1)$ inférieur ou égal à $2Arctg\dfrac{CD}{2F}$ où CD est le diamètre du cylindre (10) et F la distance entre le point d'origine des jets de carburant issus de l'injecteur (24) et la position du piston correspondant à un angle de vilebrequin de 50° par rapport au point mort haut (PMH) et **en ce que** les moyens d'admission (14, 16) sont prévus pour admettre le fluide gazeux dans la chambre de combustion avec un taux de swirl inférieur ou égal 1,7.

7. Moteur selon la revendication 6, **caractérisé en ce que** les moyens d'admission comportent au moins une tubulure d'admission conformée pour admettre le fluide gazeux avec un taux de swirl inférieur ou égal à 1,7.

8. Moteur selon la revendication 6 dans lequel les moyens d'admission comprennent un moyen de vannage (42), **caractérisé en ce qu'**il comprend au moins un moyen de commande (44) pour actionner le moyen de vannage (42) de manière à obtenir un taux de swirl inférieur ou égal à 1,7.

9. Moteur selon la revendication 6, **caractérisé en ce que** l'angle de nappe $(a_1)$ de l'injecteur (24) est choisi entre 0° et 120°.

10. Moteur selon la revendication 9, **caractérisé en ce que** l'angle de nappe $(a_1)$ de l'injecteur (24) est choisi entre 40° et 100°.

11. Moteur selon la revendication 6, **caractérisé en ce que** l'angle au sommet $(a_2)$ du téton (30) est choisi supérieur à l'angle de nappe $(a_1)$ d'une valeur comprise entre 0° et 30°.

12. Moteur selon l'une des revendications 6 à 11 dans lequel le bol comprend une paroi latérale inclinée (38), **caractérisé en ce que** l'angle d'inclinaison de la paroi (38) est inférieur à 45°.

## Claims

1. A method for ensuring the mixing of at least one gaseous fluid in the combustion chamber of a direct-injection internal combustion engine including at least a cylinder (10), a cylinder head (12), a piston (22) sliding in this cylinder, a fuel injector (24), a combustion chamber delimited on one side by the upper face of the piston (22) including a stud (30) pointing towards the cylinder head (12) and arranged in a concave bowl (28), and intake means (14, 18) for at least one gaseous fluid, said intake means being adapted to admit the gaseous fluid into the combustion chamber in a vortex or swirl movement, **characterised in that** the fuel is injected with the injector (24) having a nappe angle ($a_1$) which is less than or

equal to $2Arctg \dfrac{CD}{2F}$ where CD is the diameter of the cylinder (10) and F is the distance between the point of origin of the fuel jets coming from the injector (24) and the position of the piston corresponding to a crankshaft angle of 50° in relation to the upper dead centre (UDC) and **in that** the gaseous fluid is admitted with a swirl rate which is less than or equal to 1.7.

2. The method according to Claim 1, **characterised in that** the gaseous fluid is admitted in a vortex or swirl movement which is coaxial with that of the bowl (28).

3. The method according to Claim 1, **characterised in that** the fuel is injected with a nappe angle ($a_1$) which is less than or equal to 120°.

4. The method according to Claim 3, **characterised in that** the fuel is injected with a nappe angle ($a_1$) which is between 40° and 100°.

5. The method according to one of the preceding claims, **characterised in that** a piston (22) is used with a stud (30) such that the angle at the summit ($a_2$) of said stud is substantially concordant with the nappe angle ($a_1$) of the injector (24) and a bowl (28), the wall (38) of which is adapted such that the fuel injected is guided towards the outside thereof and is vaporised without reaching the walls of said cylinder, for any position of the piston up to $\pm$ 30° in relation to the upper dead centre (UDC).

6. An internal combustion engine including at least one cylinder (10), a cylinder head (12), a piston (22) sliding in this cylinder, a fuel injector (24), a combustion chamber delimited on one side by the upper face of the piston (22) including a stud (30) pointing towards the cylinder head (12) and arranged in a concave bowl (28), intake means (14,16) for at least one gaseous fluid, said intake means (14, 18) being adapted to admit the gaseous fluid into the combustion chamber in a vortex or swirl movement, **characterised in**

**that** this engine comprises at least the injector (24) for injecting fuel with a nappe angle ($a_1$) which is less

than or equal to $2Arctg \dfrac{CD}{2F}$ where CD is the diameter of the cylinder (10) and F is the distance between the point of origin of the fuel jets coming from the injector (24) and the position of the piston corresponding to a crankshaft angle of 50° in relation to the upper dead centre (UDC) and **in that** the intake means (14, 16) are provided to admit the gaseous fluid into the combustion chamber with a swirl rate which is less than or equal to 1.7.

7. The engine according to Claim 6, **characterised in that** the intake means comprise at least one intake pipe which is adapted in order to admit the gaseous fluid with a swirl rate which is less than or equal to 1.7.

8. The engine according to Claim 6, in which the intake means include a valve means (42), **characterised in that** it includes at least one control means (44) for actuating the valve means (42) so as to obtain a swirl rate which is less than or equal to 1.7.

9. The engine according to Claim 6, **characterised in that** the nappe angle ($a_1$) of the injector (24) is selected to be between 0° and 120°.

10. The engine according to Claim 9, **characterised in that** the nappe angle ($a_1$) of the injector (24) is selected to be between 40° and 100°.

11. The engine according to Claim 6, **characterised in that** the angle at the summit ($a_2$) of the stud (30) is selected to be greater than the nappe angle ($a_1$) by a value of between 0° and 30°.

12. The engine according to one of Claims 6 to 11, in which the bowl includes an inclined lateral wall (38), **characterised in that** the angle of inclination of the wall (38) is less than 45°.

**Patentansprüche**

1. Verfahren zum Sicherstellen der Mischung aus mindestens einem gasförmigen Fluid in der Brennkammer eines Verbrennungsmotors mit Direkteinspritzung, umfassend mindestens einen Zylinder (10), einen Zylinderkopf (12), einen Kolben (22), der in diesem Zylinder gleitet, eine Treibstoffeinspritzdüse (24), eine Brennkammer, die auf einer Seite von der Oberseite des Kolbens (22) begrenzt ist, umfassend einen zum Zylinderkopf (12) zeigenden Zapfen (30) und angeordnet in einem konkaven Behälter (28), und Einlassmittel (14, 18) für mindestens ein gasförmiges Fluid, wobei die Einlassmittel derart ausgeführt sind, dass sie das gasförmige Fluid in die Brennkammer in einer Wirbel- oder Swirlbewegung einlassen, **dadurch gekennzeichnet, dass** der Treibstoff mit einer Einspritzdüse (24)

mit einem Flächenwinkel ($a_1$) kleiner oder gleich

$$2\,Arctg\,\frac{CD}{2F}$$ eingespritzt wird, wobei DC der Durchmesser des Zylinders (10) und F der Abstand zwischen dem Ausgangspunkt der Treibstoffstrahlen, die von der Einspritzdüse (24) kommen, und der Position des Kolbens entsprechend einem Kurbelwellenwinkel von 50° zum oberen Totpunkt (PMH) ist, und dass das gasförmige Fluid mit einer Swirlrate kleiner oder gleich 1,7 eingelassen wird.

2. Verfahren nach Anspruch 1, **dadurch gekennzeichnet, dass** das gasförmige Fluid in einer Wirbel- oder Swirlbewegung koaxial zu jener des Behälters (28) eingelassen wird.

3. Verfahren nach Anspruch 1, **dadurch gekennzeichnet, dass** der Treibstoff mit einem Flächenwinkel ($a_1$) kleiner oder gleich 120° eingespritzt wird.

4. Verfahren nach Anspruch 3, **dadurch gekennzeichnet, dass** der Treibstoff mit einem Flächenwinkel ($a_1$) zwischen 40° und 100° eingespritzt wird.

5. Verfahren nach einem der vorhergehenden Ansprüche, **dadurch gekennzeichnet, dass** ein Kolben (22) mit einem Zapfen (30) verwendet wird, so dass der Winkel an der Spitze ($a_2$) des Zapfens im Wesentlichen mit dem Flächenwinkel ($a_1$) der Einspritzdüse (24) übereinstimmt, und ein Behälter (28) verwendet wird, dessen Wand (38) derart ausgebildet ist, dass der eingespritzte Treibstoff zum Äußeren derselben geleitet und verdampft wird, ohne die Wände des Zylinders zu erreichen, und zwar für jede Position des Kolbens bis $\pm$ 30° zum oberen Totpunkt (PMH).

6. Verbrennungsmotor, umfassend mindestens einen Zylinder (10), einen Zylinderkopf (12), einen Kolben (22), der in diesem Zylinder gleitet, eine Treibstoffeinspritzdüse (24), eine Brennkammer, die auf einer Seite von der Oberseite des Kolbens (22) begrenzt ist, umfassend einen zum Zylinderkopf (12) zeigenden Zapfen (30) und angeordnet in einem konkaven Behälter (28), und Einlassmittel (14, 16) für mindestens ein gasförmiges Fluid, wobei die Einlassmittel (14, 18) derart ausgeführt sind, dass sie das gasförmige Fluid in die Brennkammer in einer Wirbel- oder Swirlbewegung einlassen, **dadurch gekennzeichnet, dass** der Treibstoff mit einer Einspritzdüse (24) mit einem Flächenwinkel ($a_1$) kleiner oder gleich

$$2\,Arctg\,\frac{CD}{2F}$$ eingespritzt wird, wobei DC der Durchmesser des Zylinders (10) und F der Abstand zwischen dem Ausgangspunkt der Treibstoffstrahlen, die von der Einspritzdüse (24) kommen, und der Position des Kolbens entsprechend einem Kurbelwellenwinkel von 50° zum oberen Totpunkt (PMH) ist, und dass die Einlassmittel (14, 16) dazu vorgesehen sind, das gasförmige Fluid mit einer Swirlrate kleiner oder gleich 1,7 einzulassen.

7. Motor nach Anspruch 6, **dadurch gekennzeichnet, dass** die Einlassmittel mindestens ein Einlassrohr umfassen, das derart ausgebildet ist, dass er das gasförmige Fluid mit einer Swirlrate kleiner oder gleich 1,7 einlässt.

8. Motor nach Anspruch 6, bei dem die Einlassmittel ein Ventilmittel (42) umfassen, **dadurch gekennzeichnet, dass** er mindestens ein Steuermittel (44) umfasst, um das Ventilmittel (42) zu betätigen, um eine Swirlrate kleiner oder gleich 1,7 zu erhalten.

9. Motor nach Anspruch 6, **dadurch gekennzeichnet, dass** der Flächenwinkel ($a_1$) der Einspritzdüse (24) zwischen 0° und 120° gewählt wird.

10. Motor nach Anspruch 9, **dadurch gekennzeichnet, dass** der Flächenwinkel ($a_1$) der Einspritzdüse (24) zwischen 40° und 100° gewählt wird.

11. Motor nach Anspruch 6, **dadurch gekennzeichnet, dass** der Winkel an der Spitze ($a_2$) des Zapfens (30) größer als der Flächenwinkel ($a_1$) um einen Wert zwischen 0° und 30° gewählt wird.

12. Motor nach einem der Ansprüche 6 bis 11, bei dem der Behälter eine geneigte Seitenwand (38) umfasst, **dadurch gekennzeichnet, dass** der Neigungswinkel der Wand (38) kleiner als 45° ist.

EP 1 340 891 B1

FIG.1

## FIG.2

## FIG.3

## FIG.4

## FIG.5

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5906183 A